## Europäisches Patentamt
## European Patent Office
## Office européen des brevets

(11) Veröffentlichungsnummer: **0 084 109**
**B1**

(12) **EUROPÄISCHE PATENTSCHRIFT**

(45) Veröffentlichungstag der Patentschrift:
09.04.86

(51) Int. Cl.⁴: **H 02 P 7/40, H 03 K 5/153**

(21) Anmeldenummer: **82111202.6**

(22) Anmeldetag: **03.12.82**

(54) **Anordnung zum läuferfrequenzabhängigen Kurzschliessen der Läufervorwiderstände für Antriebsmotoren.**

(30) Priorität: **21.12.81 DE 3150570**

(43) Veröffentlichungstag der Anmeldung:
**27.07.83 Patentblatt 83/30**

(45) Bekanntmachung des Hinweises auf die Patenterteilung:
**09.04.86 Patentblatt 86/15**

(84) Benannte Vertragsstaaten:
**AT BE CH LI LU NL SE**

(56) Entgegenhaltungen:
**DE - A - 1 906 383**
**DE - A - 2 153 228**
**US - A - 3 772 579**

**Patent Abstracts of Japan Band 6, Nr. 87, 25. Mai 1982**
**Patent Abstracts of Japan Band 3, Nr. 131, 31, Oktober 1979, Seite 32E148**
**Betriebsanleitung SIMOMAT B 7RP10**
**Betriebsanleitung SIMATIC S5-110A**

(73) Patentinhaber: **Siemens Aktiengesellschaft, Berlin und München Wittelsbacherplatz 2, D-8000 München 2 (DE)**

(72) Erfinder: **Grosser, Benno, Blumenstrasse 17, D-8451 Kümmersbruck (DE)**

## Beschreibung

Die Erfindung bezieht sich auf eine Anordnung zum läuferfrequenzabhängigen Kurzschließen der Läufervorwiderstände für Antriebsmotoren, insbesondere bei Hebezeugen mittels einer, ein Frequenzerfassungs- und ein Umformungsgerät aufweisenden läuferfrequenzabhängigen Torschaltung sowie einer Sollwertvorgabe und einer den Kurzschließbefehl erzeugenden Vergleichsschaltung.

Bei einer bekannten Anordnung der obengenannten Art (SIMOMAT B 7RPIO) wird die Frequenz durch Aufladen eines Kondensators erfaßt, der auf eine bestimmte Spannung aufgeladen werden muß. Die vorgegebene Spannung entspricht hier der zu messenden Frequenz, d.h. der Sollwert muß hier vom Fachmann über Potentiometer und externe Spannungsmesser eingestellt werden. Es ist nicht ohne weiteres von außen her die einzustellende Läuferfrequenz erkennbar. Hierzu ist eine Zuordnungsliste von Läuferfrequenz zu zu messender Spannung notwendig. Hinzu kommt, daß ein bestimmter Innenwiderstand des Meßinstrumentes einzuhalten ist, um die Zuordnung zu gewährleisten. Weiterhin sind bei derartigen Einstellungen die Toleranzen der Bauelemente allgemein zu berücksichtigen.

Aus der DE-B 11 08 393 ist auch eine Anordnung zum läuferfrequenzabhängigen Kurzschließen der Läufervorwiderstände bei einem Antriebsmotor, insbesondere bei Hebezeugen (vgl. Anspruch 1 und Sp. 3, Zeile 27 bis 34) bekannt.

Die DE-A-2 153 228 stellt eine Schaltungsanordnung dar, mit der Schwingungen einer bestimmten Periodendauer erkannt werden können. Sie ist zur Übertragung von Informationen, die beispielsweise aus verschiedenen Tonfrequenzen bestehen können, gedacht. Das Problem der läuferfrequenzabhängigen Steuerung der Läufervorwiderstände eines Antriebsmotors, insbesondere bei Hebezeugen, ist hier nicht angesprochen, so daß der aus dieser Entgegenhaltung entnehmbare Binärzähler mit den Zählstufen, dem Quarzgenerator und der Begrenzerschaltung keinerlei Hinweis geben kann, wie diese Einzelelemente die Läufervorwiderstände läuferfrequenzabhängig kurzschließen sollen.

Durch die Erfindung soll somit eine Anordnung der obengenannten Art geschaffen werden, die eine einfache und sichere Einstellung des Sollwertes und damit eine exaktere Funktion der Gesamtanordnung gewährleistet, wobei nicht definierbare Frequenzgemische im Läufer bei der Auswertung der Läuferfrequenz unberücksichtigt bleiben sollen. Dies wird erfindungsgemäß dadurch erreicht, daß die Torschaltung im Öffnungszustand eine feste Referenzfrequenz (Referenzfrequenzgenerator) auf einen Zähler freigibt, der seinerseits die gezählten Perioden der Referenzfrequenz über eine Matrixschaltung (Eprom) als digitalen Läuferfrequenzistwert der Vergleichsschaltung weitergibt und die Sollwertvorgabe digital von einstellbaren Codierschaltern an die Vergleichsschaltung erfolgt, wobei der Kurzschließbefehl der Vergleichsschaltung durch eine Verzögerungsschaltung beeinflußbar ist.

Um auch den Istwert möglichst unabhängig von Toleranzen der Bauelemente wie Kondensatoren und Widerstände zu ermfassen, ist es vorteilhaft, wenn die feste Referenzfrequenz von einem Quarzoszillator (Referenzfrequenzgenerator) erzeugt ist. Um die erfindungsgemäße Anordnung mit einer geringen Anzahl von Bauteilen, insbesondere hinsichtlich der Matrixschaltung aufbauen zu können, ist es vorteilhaft, wenn die Matrixschaltung von einem Eprom (Erasable programmable memory) gebildet ist. Die Verwendung des Eprom erschließt andererseits die Möglichkeit, die Referenzfrequenz zu erhöhen. Die Erhöhung der Referenzfrequenz erlaubt eine genauere Weitergabe der Läuferfrequenz von der Matrixschaltung aus, da der Eprom praktisch ohne Mehrkosten genügend Speicherplätze zur Verfügung hat. Durch Erhöhung der Referenzfrequenz ist eine bessere Auf-lösung des Meßergebnisses erreichbar. Im Hinblick auf Speicherkosten und geforderte Genauigkeit bei der Erfassung der Läuferfrequenz hat sich eine Referenzfrequenz von 5 kHz als vorteilhaft erwiesen.

Um den Adressierbereich der Matrix nicht zu überschreiten, ist es vorteilhaft, wenn die Anzahl der gezählten Perioden der Referenzfrequenz auf einen maximalen Wert begrenzt ist. Dieser maximale Wert wird im allgemeinen der Anzahl der Perioden der Referenzfrequenz während der maximalen Öffnung der Torschaltung entsprechen.

Um weitere Schaltmittel zu vermeiden, d.h. bereits vorhandene Systeme verwenden zu können, ist es vorteilhaft, wenn das Frequenzerfassungs- und Umformungsgerät und die Sollwertvorgabe mit der Vergleichsschaltung als Zusatzbaustein zu einer speicherprogrammierbaren Steuerung aufgebaut ist.

Anhand der Zeichnun wird ein Ausführungsbeispiel ge-mäß der Erfindung beschrieben und die Wirkungsweise näher erläutert.

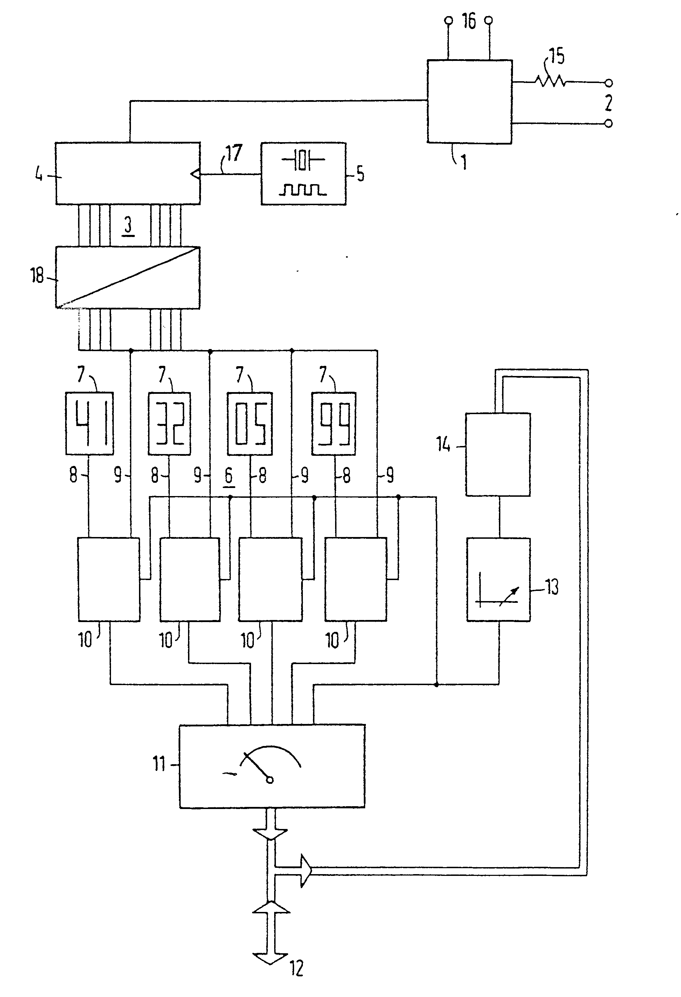

Die in der Zeichnung als Blockschaltbild dargestellte Anordnung zum läuferfrequenzabhängigen Kurzschließen der Läuferwiderstände für Antriebsmotoren, die insbesondere für Hebezeuge von großem Interesse ist, besteht aus dem Frequenzerfassungsferät 1, dem die Läuferspannung 2 zugeführt wird. Das Umformungsgerät 3 besteht aus dem Zähler 4, dem Referenzfrequenzgenerator 5 sowie im vorliegenden Fall aus dem Eprom 18. Die digitale Sollwertvorgabe 6 steht im vorliegenden Fall aus vier zweistelligen Codierschaltern 7. Die Codierschalter 7 sind BCD codiert (Binärcode-Dezimal) die über Leitungen 8 mit Vergleichern 10 zusammengeschaltet sind. Über die Leitungen 9 wird der Istwert vom Eprom 18 auf die Vergleicher 10 geschaltet. Sobald der Istwert den Sollwert unterschreitet, geben die Vergleicher 10 ein Signal an eine Decodierschaltung 11 für das Bussystem 12 einer freiprogrammierbaren Steuerung wie beispielsweise aus Betriebsanleitung Automatisierungsgerät SIMATIC S5-110 A bekannt.

Eine Verzögerungsschaltung 13 sorgt über die Leitungen des Bussystems 12 abhängig vom Schaltzustand der Schaltgeräte für den Antriebsmotor über den Decoder 14 für eine Verzö- gerung des Ausgangsbefehls der Decodierschaltung 11.

Zur Funktion der erfindungsgemäßen Anordnung ist folgendes auszuführen: Das Frequenzumformungsgerät 1 formt die Leiterspannung in eine frequenzanaloge Rechteckspannung um. Die Eingangsstrombegrenzung des Frequenzerfassungsgerätes 1 erfolgt durch eine Drossel 15. Die Potentialtrennung zwischen Läuferspannung und der der Anordnung zugeführten Spannung erfolgt über einen nicht näher dargestellten Optokoppler. Um den Meßfehler möglichst gering zu halten, wird die Periodendauer der Läuferfrequenz von Beginn einer Vollwelle bis zum Beginn der nächsten Vollwelle gemessen. Über den Eingang 16 kann über einen Frequenzgenerator die Läuferspannung simuliert werden, so daß dieser Eingang als Testeingang vorgesehen werden kann. Der Ausgang des Frequenzumformungsgerätes 1 ist mit dem Eingang des Umformungsgerätes 3 verbunden. Dieses Eingangssignal gibt den Ausgang 17 des Referenzfrequenzgenerators nach Art einer Torschaltung frei, so daß entsprechend einer Periode der Läuferspannung die Anzahl der Impulse des Referenzgenerators 5 durch den Zähler 4 gezählt werden können, d.h. die Zahl der Impulse ist proportional der Periodendauer. Um das Meßergebnis in Hertz zu erhalten ist es notwendig, die gemessene Periodendauer in Hertz umzuwandeln. Dies erfolgt im Ausführungsbeispiel durch Weitergabe der Periodendauer als Adresse an einen Epromspeicher 18. In diesem Speicherplatz steht BCD-codiert der Wert der Frequenz, die der Periodendauer entspricht. Diese BCDcodierte Frequenz liegt nun an den Leitungen 9 an und wird in den Vergleichern 10 mit dem durch die Codierschalter 7 eingestellten Sollwert der Über die Leitung 8 dem Vergleicher 10 zugeführt wird, verglichen und als Signal der Decodierschaltung 11 zugeführt, die ihrerseits das Signal über die Busleitung 12 der speicherprogrammierbaren Steuerung nach Verzögerung durch die Verzögerungsschaltung 13 weitergibt an die für das Kurzschließen der Läuferwiderstände zuständigen Schaltgeräte.

Durch die erfindungsgemäße Anordnung ist es möglich, ein Meßergebnis, das praktisch unabhängig ist von Toleranzen irgendwelcher Kondensatoren oder Widerständen zu erhalten. Ebenso ist es für den Anwender ohne Spezialkenntnisse ohne Schwlerigkeiten und Vorbildung möglich, den Sollwert mühelos einzustellen. Die Baugruppe kann direkt über das Bussystem bekannter speicherprogrammierbaren Steuerungen angesprochen und auch abgefragt werden.

**Patentansprüche**

1. Anordnung zum läuferfrequenzabhängigen Kurzschließen der Läufervorwiderstände eines Antriebsmotors, insbesondere bei Hebezeugen, mittels einer ein Frequenzerfassungs- und Umformungsgerät (1,3) aufweisenden läuferfrequenzabhängigen Torschaltung sowie einer Sollwertvorgabe (6) und einer den Kurzschließbefehl erzeugenden Vergleichsschaltung (10, dadurch gekennzeichnet, daß die Torschaltung im Öffnungszustand eine feste Referenzfrequenz (Referenzfrequenzgenerator 5) auf einen Zähler (4) freigibt, der seinerseits die gezählten Perioden der Referenzfrequenz über eine Matrixschaltung (Eprom 18) als digitalen Läuferfrequenzistwert der Vergleichsschaltung (Vergleich 10) weitergibt und die Sollwertvorgabe (6) digital von einstellbaren Codierschaltern (7) an die Vergleichsschaltung (10) erfolgt, wobei der Kurzschließbefehl der Vergleichsschaltung (Vergleicher 10) durch eine Verzögerungsschaltung (13) beeinflußbar ist.

2. Anordnung nach Anspruch 1, dadurch gekennzeichnet, daß die feste Referenzfrequenz von einem Quarzoszillator (Referenzfrequenzgenerator 5) erzeugt ist.

3. Anordnung nach Anspruch 1 oder 2, dadurch gekennzeichnet, daß die Matrixschaltung von einem Eprom (18) (Erasable programmable memory) gebildet ist.

4. Anordnung nach Anspruch 1 oder 2, dadurchgekennzeichnet, daß die Referenzfrequenz 5kHz beträgt.

5. Anordnung nach einem der vorhergehenden Ansprüche, dadurch gekennzeichnet, daß das Frequenzerfassungs- (1) und Umformungsgerät (3) und die Sollwertvorgabe (6) mit der Vergleichsschaltung (10) als Zusatzbaustein zu einer speicherprogrammierbaren Steuerung aufgebaut ist.

6. Anordnung nach einem der vorhergehenden Ansprüche, dadurch gekennzeichnet, daß die Anzahl der gezählten Perioden der Referenzfrequenz auf einen maximalen Wert begrenzt ist.

**Claims**

1. Arrangement for the rotor-frequency-dependent short-circuiting of the rotor series resistances of a drive motor, more particularly for lifting devices, by means of a rotor-frequencydependent gate circuit having a frequency-determining device and a converting device (1, 3) and also by means of a desired value presetter (6) and a comparator circuit (10) for producing the short-circuit command, characterised in that the gate circuit, in the open state, releases a fixed reference frequency (reference frequency generator 5) to a counter (4) which in turn transmits the counted periods of the reference frequency via a matrix circuit (Eprom 18) as actual digital rotor frequency value to the comparator circuit (comparator 10), and the desired value presetter (6) is effected digitally by adjustable coding switches (7) to the comparator circuit (10), the short-circuit command of the comparator circuit (comparator 10) being capable of being influenced by a delay circuit (13).

2. Arrangement according to claim 1, characterised inthat the fixed reference frequency is produced by a crystal oscillator (reference frequency generator 5).

3. Arrangement according to claim 1 or 2, characterised in that the matrix circuit is formed by an Eprom (18) (Erasable programmable memory).

4. Arrangement according to claim 1 or 2, characterised in that the reference frequency is 5kHz.

5. Arrangement according to one of the preceding claims, characterised in that the frequencydetermining device (1) and frequency-converting device (3) and the desired value presetter (6) are constructed with the comparator circuit (10) as a supplementary component to provide a store-programmable control.

6. Arrangement according to one of the preceding claims, characterised in that the number of counted periods of the reference frequency is limited to a maximum value.

**Revendications**

1. Dispositif pour court-circuiter, en fonction de la fréquence du rotor, les résistances série du rotor d'un moteur d'entrainement, notamment pour des engins de levage, au moyen d'un circuit de porte logique, qui comporte un appareil (1, 3) de détection et de conversion de la fréquence et qui posséde un fonctionnement dépendant de la fréquence du rotor, ainsi qu'un circuit (6) de prédétermination de la valeur de consigne et un circuit comparateur (10) délivrant l'ordre de court-circuitage, caractérisé par le fait que le circuit de porte logique libère, à l'état passant, une fréquence de référence fixe (générateur 5 de la fréquence de référence) à un compteur (4) qui, pour sa part, retransmet, par l'intermédiaire d'un circuit matriciel (Eprom 18), les pèriodes comptées de la fréquence de référence en tant que valeur réelle numérique de la fréquence du rotor au circuit comparateur (comparaison 10) et que la prédétermination de la valeur de consigne (6) est réalisée numériquement par des commutateurs de codage réglables (7) dans le circuit comparateur (10), un circuit de retardement (13) pouvant agir sur l'ordre de court-circuitage du circuit comparateur (comparateur 10).

2. Dispositif suivant la revendication 1, caractérisé par le fait que la fréquence de référence fixe est produite par un oscillateur à quartz (générateur 5 de la fréquence de référence).

3. Dispositif suivant la revendication 1 ou 2, caractérisé par le fait que le circuit matriciel est formé par une mémoire Eprom (18) (Erasable programmable memory).

4. Dispositif suivant la revendication 1 ou 2, caractérisé par le fait que la fréquence de référence est égale à 5 kHz.

5. Dispositif suivant l'une des revendications précédentes, caractérisé par le fait que l'appareil de détermination de la fréquence (1) et de conversion de la fréquence (3) et le dispositif (6) de prédétermination de la valeur de consigne sont réalisés, avec le circuit comparateur (10), de manière à constituer un module supplémentaire s'ajoutant à un dispositif de commande à mémoire programmable.

6. Dispositif suivant l'une des revendications précédentes, caractérisé par le fait que le nombre des périodes comptées de la fréquence de référence est limité à une valeur maximale.